# EUROPEAN PATENT APPLICATION

(11) **EP 3 506 112 A1**
(43) Date of publication of application: **03.07.2019**
(21) Application number: 18209002.7
(22) Date of filing: 28.11.2018
(51) Int. Cl.: G06F 12/084, G06F 12/0842, G06F 12/0811

(54) **MULTI-LEVEL SYSTEM MEMORY CONFIGURATIONS TO OPERATE HIGHER PRIORITY USERS OUT OF A FASTER MEMORY LEVEL**

(30) Priority: 28.12.2017 US 201715857463
(71) Applicant: INTEL Corporation, Santa Clara, CA 95054 (US)
(72) Inventor: ARAFA, Mohamed, Chandler, AZ 85226 (US); VISWANATHAN, Krishnaswamy, Portland, OR 97229 (US)
(74) Representative: Rummler, Felix

(57) **Abstract**

A method is described. The method includes recognizing higher priority users of a multi-level system memory characterized by a faster higher level and a slower lower level in which the higher level is to act as a cache for the lower level and in which a first capacity of the higher level is less than a second capacity of the lower level such that caching resources of the higher level are oversubscribe-able. The method also includes performing at least one of: declaring an amount of the second capacity un-useable to reduce oversubscription of the caching resources; allocating system memory address space of the multi-level system memory so that requests associated with lower priority users will not compete with requests associated with the higher priority users for the caching resources.

## Description

### Field of the Invention

The field of invention pertains generally to the computing sciences, and, more specifically, to multi-level system memory configurations to operate higher priority users out of a faster memory level.

### Background

Computing system designers are constantly seeking ways to improve the efficiency and/or performance of their systems. The efficiency and/or performance of a computing system is generally dependent on its system memory. As such, systems designers have recently placed increased emphasis on system memory design and/or system memory usage models.

### Figures

A better understanding of the present invention can be obtained from the following detailed description in conjunction with the following drawings, in which:
Fig. 1 shows a computing system having a multi-level system memory;
Fig. 2 shows a first configuration to provide higher priority users with a faster level of the multi-level system memory;
Fig. 3 shows a first configuration to provide higher priority users with a faster level of the multi-level system memory;
Fig. 4 shows a method for configuring a computer system;
Fig. 5 shows a computing system.

### Detailed Description

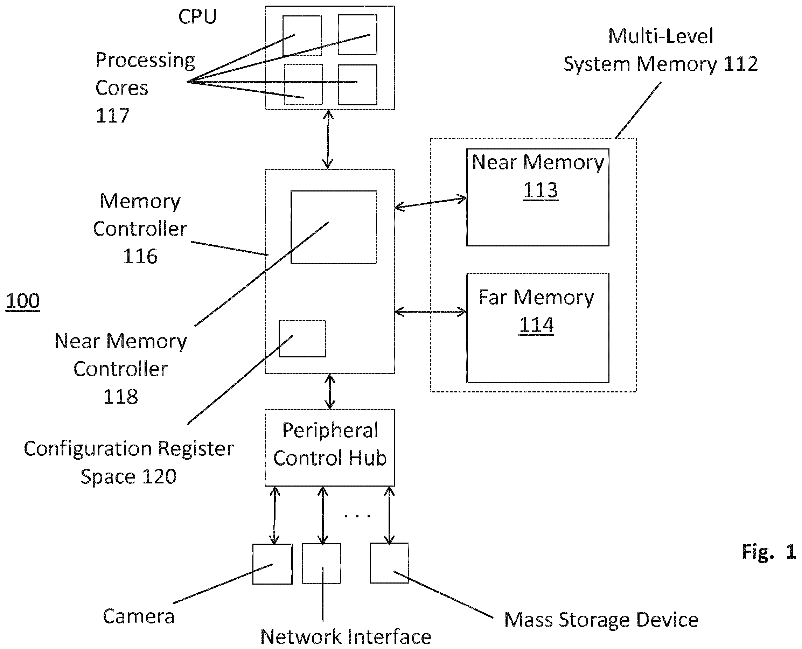

Fig. 1 shows an embodiment of a computing system 100 having a multi-tiered or multi-level system memory 112. According to various embodiments, a smaller, faster near memory 113 (e.g., higher bandwidth and/or small access time(s), etc.) may be utilized as a cache for a larger, slower far memory 114 (e.g., lower bandwidth and/or large access time(s), etc.). In various embodiments, near memory 113 is used to store the more frequently accessed items of program code and/or data that are kept in system memory 112. By storing the more frequently used items in near memory 113, the system memory 112 will be observed as faster because the system will often read/write from/to items that are being stored in faster near memory 113.

According to various embodiments, near memory 113 has lower access times than the lower tiered far memory 114 For example, the near memory 113 may exhibit reduced access times by having a faster clock speed than the far memory 114. Here, the near memory 113 may be a faster (e.g., lower access time), volatile system memory technology (e.g., high performance dynamic random access memory (DRAM) and/or SRAM memory cells) co-located with the memory controller 116. By contrast, far memory 114 may be either a volatile memory technology implemented with a slower clock speed (e.g., a DRAM component that receives a slower clock) or, e.g., a non volatile memory technology that is slower (e.g., longer access time) than volatile/DRAM memory or whatever technology is used for near memory.

For example, far memory 114 may be comprised of an emerging non volatile random access memory technology such as, to name a few possibilities, a phase change based memory, a three dimensional crosspoint memory, "write-in-place" non volatile main memory devices, memory devices having storage cells composed of chalcogenide, multiple level flash memory, multi-threshold level flash memory, a ferro-electric based memory (e.g., FRAM), a magnetic based memory (e.g., MRAM), a spin transfer torque based memory (e.g., STT-RAM), a resistor based memory (e.g., ReRAM), a Memristor based memory, universal memory, Ge2Sb2Te5 memory, programmable metallization cell memory, amorphous cell memory, Ovshinsky memory, etc. Any of these technologies may be byte addressable so as to be implemented as a system memory in a computing system (also referred to as a "main memory") rather than traditional block or sector based non volatile mass storage.

Emerging non volatile random access memory technologies typically have some combination of the following: 1) higher storage densities than DRAM (e.g., by being constructed in three-dimensional (3D) circuit structures (e.g., a crosspoint 3D circuit structure)); 2) lower power consumption densities than DRAM (e.g., because they do not need refreshing); and/or, 3) access latency that is slower than DRAM yet still faster than traditional non-volatile memory technologies such as FLASH. The latter characteristic in particular permits various emerging non volatile memory technologies to be used in a main system memory role rather than a traditional mass storage role (which is the traditional architectural location of non volatile storage).

Regardless of whether far memory 114 is composed of a volatile or non volatile memory technology, in various embodiments far memory 114 acts as a true system memory in that it supports finer grained data accesses (e.g., cache lines) rather than only larger based "block" or "sector" accesses associated with traditional, non volatile mass storage (e.g., solid state drive (SSD), hard disk drive (HDD)), and/or, otherwise acts as a byte addressable memory that the program code being executed by processor(s) of the CPU operate out of. In various embodiments, system memory may be implemented with one or more dual in-line memory modules (DIMMs) where a single DIMM card has both volatile (e.g., DRAM) and (e.g., emerging) non volatile memory semiconductor chips disposed on it. In other configurations DIMM cards having only DRAM chips may be plugged into a same system memory channel (e.g., a double data rate (DDR) channel) with DIMM cards having only non volatile system memory chips.

In another possible configuration, a memory device such as a DRAM device functioning as near memory 113 may be assembled together with the memory controller 116 and processing cores 117 onto a single semiconductor device (e.g., as embedded DRAM) or within a same semiconductor package (e.g., stacked on a system-on-chip that contains, e.g., the CPU, memory controller, peripheral control hub, etc.). Far memory 114 may be formed by other devices, such as slower DRAM or non-volatile memory and may be attached to, or integrated in the same package as well. Alternatively, far memory may be external to a package that contains the CPU cores and near memory devices. A far memory controller may also exist between the main memory controller and far memory devices. The far memory controller may be integrated within a same semiconductor chip package as CPU cores and a main memory controller, or, may be located outside such a package (e.g., by being integrated on a DIMM card having far memory devices).

In various embodiments, all or substantially all components of the memory controller 116 are integrated on a system-on-chip having multiple (e.g., general purpose) processing cores 117, a peripheral control hub and other circuitry (e.g., a graphics processing unit (GPU)). In other embodiments at least some portion of these circuits are implemented off of such a chip. For instance, in the case where the far memory 114 is implemented with emerging non volatile memory chips, a far memory controller may be locally coupled to such memory chips off the main system-on-chip die (e.g., on one or more DIMMs having the emerging non volatile memory chips). Alternatively or in combination, the near memory control circuitry or some portion thereof may be disposed outside such a chip (e.g., on one or more DIMMs having the volatile (e.g., DRAM) memory chips where such DIMM(s) may even include emerging non volatile memory chips and even far memory controller circuitry or some portion thereof). In various possible packaging scenarios, even if such circuits are located off a system-on-chip as described above they may nevertheless exist within the same package as the system-on-chip (e.g., such as in a same semiconductor chip package where memory chips and associated external logic from the system-on-chip are integrated in a stacked chip solution).

In various embodiments, near memory 113 acts as a memory side cache that caches the most frequently accessed items from main memory (which may service more than just the CPU core request(s) such as a graphical processing unit (GPU) requests, peripheral requests, network interface requests, etc.). Alternatively or in combination, the memory controller 116 and/or some other portion of the system (e.g., one or more of the CPUs, an operating system, a virtual machine monitor, an operating system instance, etc.) does not recognize the existence of separate unique system memory address space within near memory 113 or some portion thereof.

Here, storage space of near memory 113 that is not recognized as having its own, separate system memory address space may instead be reserved as a memory-side cache region for far memory 114 or regions thereof. In such configurations, e.g., far memory 114 has separate system memory address space and the near memory 113 acts as cache for the more frequently used items (e.g., cache lines, pages, etc.) that are formally kept in far memory 114 and whose formal system memory addresses are mapped to far memory 114.

Nevertheless, such systems may nevertheless be configured to effectively provide system memory address space in near memory if any relationship that exists between which near memory resources provide cache space for which far memory resources can be adjusted to reduce or eliminate contention between requests that map to a same near memory cache slot location. One example where such a configuration is possible is a system that implements near memory 113 as a direct mapped cache. With a direct mapped cache, a group of system memory addresses map to one "slot" in cache, and, different cache slots map to different groups of different system memory addresses.

For example, consider an exemplary system where far memory 114 has eight times the storage capacity of near memory 113 and both near memory 113 and far memory 114 are accessed at cache line granularity. In this case, there exists a single cache line slot in near memory 113 for every eight different cache line slots in far memory 114, where, each cache line slot in far memory 114 corresponds to a different, unique system memory address. As such, if the near memory 113 is implemented as a direct mapped cache, every eight different system memory addresses can map to a single cache line slot in near memory 113.

According to a nominal mode of operation, if the main memory controller 116 receives a read request, the near memory controller 118 determines the address of the near memory cache line slot that the request's system memory address maps to. If there is a cache hit in near memory 113 (the request's system memory address is the same as the system memory address of the cache line that is occupying the identified cache line slot in near memory), the read request is serviced by providing the cache line found in the near memory cache line slot as the response to the request.

If there is a miss, the request is directed to far memory 114 and the desired cache line is fetched from far memory 114 by direct application of the request's system memory address. The fetched cache line is not only provided to the requester to service the read request but is also written in the near memory cache line slot that the request's system memory address maps to and that just suffered a miss. The writing of the requested cache line into the cache line slot causes the eviction of the cache line that was in the near memory cache line slot. The evicted cache line is written back to its proper location in far memory 114 by direct application of its corresponding system memory address.

If the main memory controller 116 receives a write request, the write request not only has an associated system memory address but also a cache line, or portion thereof, to write into main memory 112. The near memory controller 118 determines the address of the near memory cache line slot that the request's system memory address maps to. If there is a hit, the write request is serviced by writing the cache line contents appended to the write request over the cache line in the near memory 113 slot that the request's system memory address maps to.

If there is a miss, the request is directed to far memory 114 and the content associated with the request is written into far memory 114 by direct application of the request's system memory address. The new, updated cache line is also written in the near memory cache line slot that the request's system memory address maps to and that just suffered a miss. The writing of the cache line into the near memory cache line slot causes the eviction of the cache line that was in the near memory cache line slot. The evicted cache line is written back to its proper location in far memory 114.

In the above operational description, the cache line that was associated with the newly received read or write request is placed into the near memory cache line slot in the case of a near memory cache miss in order to increase the chances of a hit in near memory for a next request received by the main memory controller 116 that maps to the cache line slot. Main memory requests have been known to demonstrate spatial and temporal locality. That is, main memory requests will often call-upon same/similar system memory addresses in narrow time windows. However, unfortunately, as the number of system memory addresses that map to a same cache line slot grows, the chance of a miss in near memory increases.

Thus, in the exemplary computer system described herein, in which, e.g., eight system memory addresses map to a same cache line slot in near memory 113, whenever a cache line having a particular system memory address occupies its proper cache line slot in near memory 113, there are seven other system memory addresses that the main memory controller 116 may receive a request for and that compete with the cache line for the cache line slot. If the spatial and temporal locality assumption does not strictly hold true, there can be detrimental thrashing of caching activity. That is, if requests having different system memory addresses that map to a same cache line slot in near memory 113 are received within narrow time windows, the requests will tend to experience cache misses rather than cache hits.

As such, the potential performance boost that near memory cache provides will be substantially lost, and, additionally, bottlenecks may exist within the main memory controller 116 as it continually evicts cache lines from near memory 113, writes new cache lines in near memory and accesses far memory 114 for each of a significant number of the requests that it receives. If any of these requests are being issued from a high priority component/process/thread within the computing system, such as a hardware or software thread that is executing on a CPU core, the substantial loss of the performance boost from near memory 113 and/or any bottlenecks within the main memory controller 116 may not be acceptable.

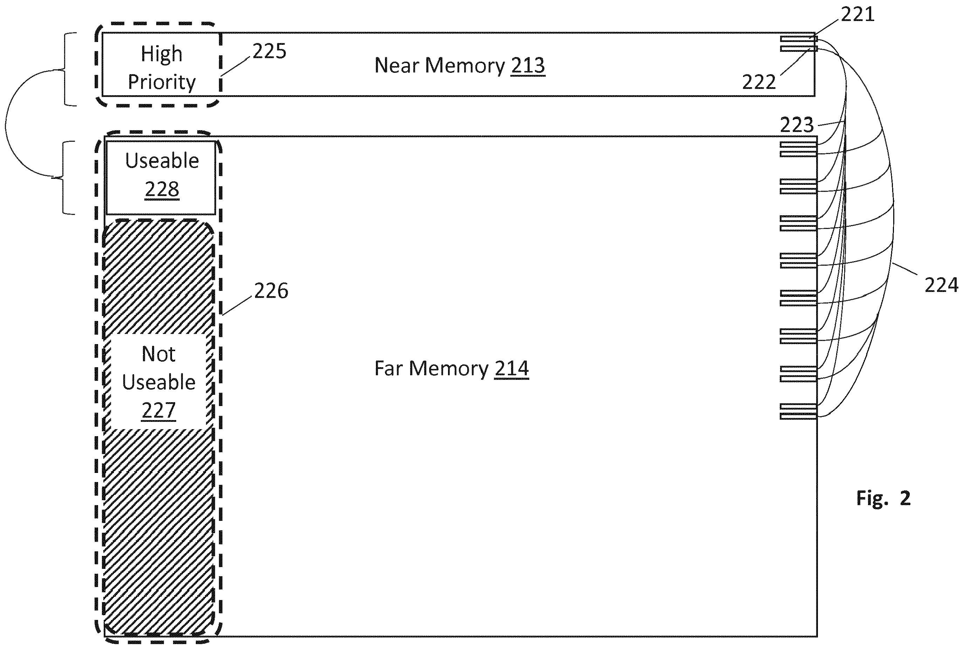

Nevertheless, the overall system may be configured to ensure the near memory performance boost for such high priority processes albeit with some sacrifice of far memory storage 114 capacity. Fig. 2 shows an architectural diagram of near memory cache capacity 213 and far memory cache capacity 214. For simplicity, the diagram continues with the example of a 1:8 ratio of near memory capacity 213 to far memory capacity 214. Fig. 2 simplistically depicts a few single cache line slots 221, 222 in near memory 213 and the corresponding cache line locations 223, 224 in far memory 214 whose system memory addresses respectively map to the cache line slots 221, 222. That is, the system memory addresses of cache line locations 223 in far memory map 214 to cache line slot 221 in near memory 213, the system memory addresses of cache line locations 224 in far memory 214 map to cache line slot 22 in near memory 213, etc.

Additionally, Fig. 2 shows a significant reserved section 225 of the near memory storage capacity being reserved for high priority components/processes/threads and also shows the corresponding amount of far memory storage capacity 226 that maps to the reserved section 225 of near memory. That is, with each unit of near memory capacity corresponding to eight units of far memory capacity, the amount of far memory storage capacity 226 whose corresponding system memory address space maps to the high priority reserved section 225 of near memory is eight times the size as the high priority reserved section 225. For simplicity, this amount of far memory storage capacity 226 is depicted as a contiguous region of the far memory 214.

Importantly, in order to secure high performance main memory speeds for certain high priority components/processes/threads, as observed in Fig. 2, seven eighths of the region 226 of far memory 214 whose system memory address space maps to cache slots within the high priority region 225 of near memory is declared unusable 227. By refraining from allocating the system memory address space of the un-useable region 227 of far memory 214, the high priority region 225 of near memory 213 can effectively be used as a directly addressable system memory and not as a memory side cache.

That is, the 1:8 near memory to far memory capacity ratio can be seen as an oversubscription of near memory caching capacity to far memory storage capacity that results in the potential for contention of near memory storage capacity, which, as described above, results in near memory miss activity and main memory bottlenecks. By declaring only one eighth of the region 226 of far memory to be useable 228, the oversubscription of near memory and corresponding contention for near memory resources can be eliminated. Here, system memory addresses that are allocated/assigned to the useable region 228 of far memory 214 will essentially operate out of the high priority near memory region 225 because they do not compete with any other system memory addresses for the same near memory storage space (such "competing" addresses correspond to the unused region 227).

In an embodiment, as discussed above, according to nominal read/write request response operation, a request's system memory address is used to determine which cache line slot the address maps to in near memory. By its nature, therefore, the cache line slot determination process presents a same near memory address for each of eight different system memory addresses. Fig. 2 depicts this behavior with eight far memory locations 223 (and corresponding system memory addresses) mapping into near memory slot 221 and eight far memory locations 224 (and corresponding system memory addresses) mapping into near memory slot 222, etc.

Therefore, in order to use the high priority near memory region 225 as high priority addressable system memory address space, for each near memory address within the high priority region 225, seven of the eight system memory addresses that map to it via the memory controller's cache line slot determination function are declared ineligible and are not permitted to be allocated to any component/process/thread that issues requests to main memory. This region of system memory address space is represented by un-useable region 227 in Fig. 2.

As such, only one system memory address per eight that map to a same near memory address via the memory controller's cache line slot determination function can be allocated. These system memory addresses correspond to useable region 228. By so doing, competition/contention between that system memory address and any other system memory address for near memory resources should be eliminated (notably, the size of regions 225 and 228 are approximately the same). Without such contention, all accesses for an address that maps to a particular cache line slot in near memory 213 will result in a "hit" in near memory. As such, the component/process/thread that has been allocated the address will enjoy much faster main memory access times because its requests are constantly being serviced out of faster near memory 213.

Here, the sacrifice of the far memory space in exchange for the guaranteed higher performance with a certain amount of system memory address space may make sense for a number of applications. In particular, in certain high performance environments, such as cloud computing execute engines to name just one example, overall performance will be noticeably better if certain time critical instances of program code are allocated to run out of the system memory address space of region 288 which results in physical execution out of near memory region 225. Examples of such higher priority program code instances generally include lower level program code such as a virtual machine monitor (VMM), an operating system or operating system instance (a VMM can generally support the execution of many operating system instances), an interrupt handler, etc..

High performance applications may also demand guaranteed execution out of near memory (e.g., artificial intelligence applications, machine learning applications, graphics processing applications, high performance storage applications, etc.). Moreover, guaranteed execution out of near memory may also be allocated for components other than a CPU hardware thread or software thread. Examples include main memory resources that are depended upon by a co-processor (e.g., a graphics processing unit or image processing unit) or high speed network interface.

As discussed above, the allocation of system memory address space with region 228 will provide high priority program code and/or other system components that need to physically operate out of near memory 213 with region 225 as the effective physical main memory resources for such code/components. By contrast, lower priority code/components may be allocated system memory space associated with far memory other than region 226. Such code/components may therefore experience some near memory thrashing. However, the lower priority nature of these components does not cause serious degradation to overall system performance because of their lower priority stature.

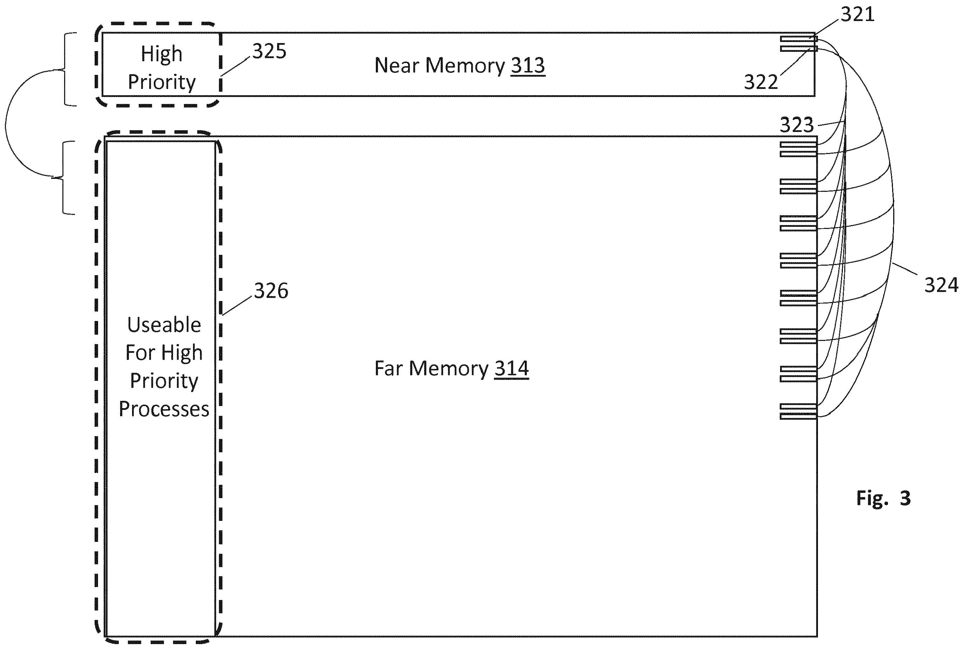

In another embodiment, which is depicted in Fig. 3, thrashing as between low priority and high priority code/components is largely prevented but thrashing between same priority levels is permitted or possible. Here, according to the embodiment of Fig. 3, high priority code/components are allocated the system memory address space associated with region 326. As such, high priority threads, for instance, may thrash with one another (1:8 oversubscription exists between near memory region 325 and far memory region 326). However, near memory 325 is essentially devoted to high priority threads. That is, a percentage of near memory 313 (the percentage represented by region 325) is allocated only for the processing of high performance threads. By contrast, the remainder of far memory 314 (the system memory address space associated with far memory 314 other than region 326) and near memory 313 (the region of near memory 313 other than region 325) is devoted to lower priority threads.

According to this approach, at least the eviction of a high priority cache line from near memory 313 because a request has been newly received for a low priority thread's cache line that competes for the same cache line slot will be avoided. That is, high priority cache lines will not be demoted from near memory cache because the compete for same cache line slots with low priority cache lines. As such, at least a region 325 of near memory 313 is guaranteed to support only high priority cache lines even is some thrashing between near memory and far memory occurs.

Note that the general approach of Fig. 3 can be extended to define more than two partitions in system memory where thrashing between partitions. That is, more generally, N different partitions may be defined in system where each partition has its own dedicated near memory space and its own dedicated far memory space and specific users are assigned to operate out of (are provided system memory addresses within) a particular partition. By so doing, thrashing as between partitions is avoided. The different partitions can even be viewed in various circumstances as different priority or class levels (e.g., by declaring different percentages of address space with each partition/class as un-useable so as to establish different degrees of contention across partitions).

Other embodiments may include both elements of the embodiments of Figs. 2 and 3. That is, for example, the approach of Fig. 3 is adopted, however, the amount of region 326 that is allocated to high priority threads is less than the entire capacity of region 326 to, e.g., 75%, 50% or 25% of the entire capacity of region 326. Here, allocated far memory space is still larger than region 228 of Fig. 2, so some thrashing between high priority threads may still take place. Nevertheless, such thrashing should be less than the approach of the Fig. 3 because near memory is not as over-subscribed for the high priority threads.

In various embodiments, the configuration/allocation of system memory address space is performed, e.g., as part of firmware program code, boot-up program code and/or system configuration program code. Any of these may accept user input to give direction on and/or automatically determine, e.g., how much far memory capacity is to be declared unusable, how much near memory oversubscription is to exist for high priority components/processes/threads, whether near memory oversubscription is to be eliminated, which system memory addresses are not to be used, which system memory addresses are to be allocated to high priority components/processes/threads, which system memory addresses are to be allocated to low priority components/processes/threads, which physical near memory addresses are to be allocated to high priority components/processes/threads, etc.

As is known in the art, software programs are generally written and compiled to refer to virtual addresses and translation look aside buffers (TLBs) in the memory unit of the CPU processing cores that execute the software programs are used to translate the virtual addresses called out by the software to actual physical system memory addresses. A virtual machine monitor, operating system and/or operating system instance may be involved in the establishment of the translations by placing specific virtual address-to-physical address translation entries in the TLBs. Notably, each entry in a TLB typically identifies a physical address as a particular "page" in system memory that a range of physical system memory addresses falls within (higher ordered bits of the physical system memory addresses correspond to the page ID in the TLB).

Here, in order to effectively configure the system so that a set of specific physical system memory addresses are not used (such as those associated with region 227 of Fig. 2) the virtual machine monitor, operating system or operating system instance does not enter any un-useable physical system memory address in a TLB. By so doing, no requests will be issued to main memory having the un-useable addresses (there is no translation that will produce them).

As such, in configuring a system in accordance with the principles described herein, firmware program code, boot-up program code, system configuration program code, virtual machine monitor program code, operating system instance program code, operating system program code or any combination thereof and/or other program code will first determine the configuration type of the system memory such as, e.g., determining if any of the approaches of Figs. 2, 3 or some combination apply. If so, the program code will then determine the system memory address implications.

For example, if a region of physical address space of near memory is to be used for high priority components/threads/processes and the approach of Fig. 2 is to be applied, the near memory addresses are identified and the physical system memory addresses that map to these addresses are determined. In determining these addresses, the program code may have some embedded understanding of the algorithm used by the memory controller to determine which cache line slot a system memory address maps to (e.g., the mathematical inverse of the algorithm) so that system memory addresses that map to a particular near memory address can be readily determined.

Some percentage of the determined physical system memory addresses are then deemed not useable and the identities of such addresses are acknowledged by a virtual machine monitor, operating system instance or operating system as being un-usable so that they are not entered in any TLBs. Likewise, useable physical system memory addresses ranges for high priority components/processes/threads and/or useable physical system memory address ranges for low priority components/processes/threads may also be determined and used by a virtual machine monitor, operating system instance and/or operating system to allocate specific system memory addresses to specific components/threads/processes based on their priority level. Any/all of the allocations described above may be performed at page granularity (each page corresponds to a set of physical system memory addresses).

It is pertinent to note that the components, processors and/or threads described above (including hardware and/or software threads) may each be more generically viewed as users of the system memory.

The exact function/algorithm used to map system memory addresses to cache line slots (the cache line slot determination function) may vary from embodiment. According to just one approach, the near memory cache is a direct mapped cache that strictly maps each cache line slot to a different unique set of system memory addresses (e.g., through a hashing function, uniquely identifying specific cache line slots with higher ordered system memory address bits, etc.). Other embodiments may employ different caching structures for the higher level of system memory (e.g., associative caches such as a set associative cache). The cache line slot determination function may be implemented in the memory controller with hardwired logic circuitry, programmable circuitry, logic circuitry that executes program code (e.g., an embedded controller or embedded processor) or any combination of these. Detection of cache hit/misses may be determined by, e.g., referring to a look-up table in the near memory controller having entries for the different cache line slots that keep a "tag" (e.g., the lower and/or intermediate system memory address bits) of the cache line that is currently occupying a particular slot. Alternatively or in combination, tag information may be kept in near memory.

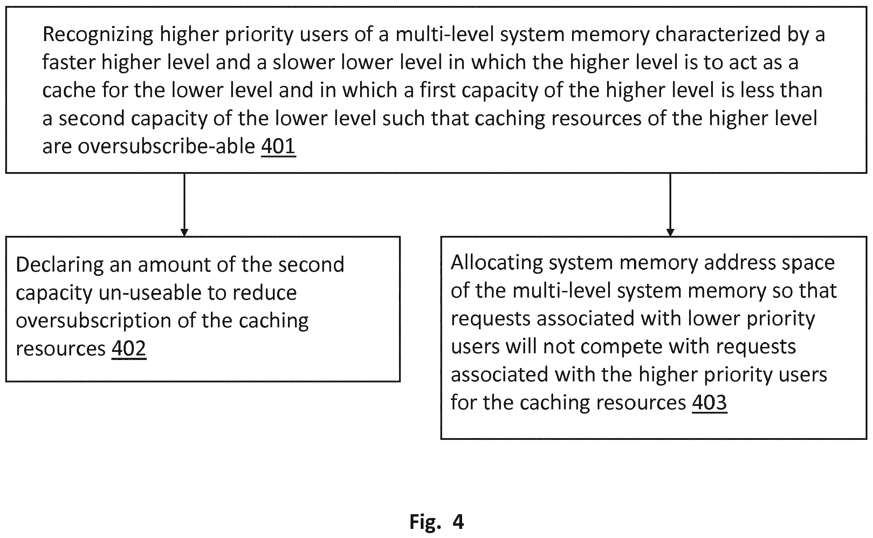

Fig. 4 shows a method described above. The method includes recognizing higher priority users of a multi-level system memory characterized by a faster higher level and a slower lower level in which the higher level is to act as a cache for the lower level and in which a first capacity of the higher level is less than a second capacity of the lower level such that caching resources of the higher level are oversubscribe-able 401. The method also includes performing at least one of: declaring an amount of the second capacity un-useable to reduce oversubscription of the caching resources 402; allocating system memory address space of the multi-level system memory so that requests associated with lower priority users will not compete with requests associated with the higher priority users for the caching resources 403.

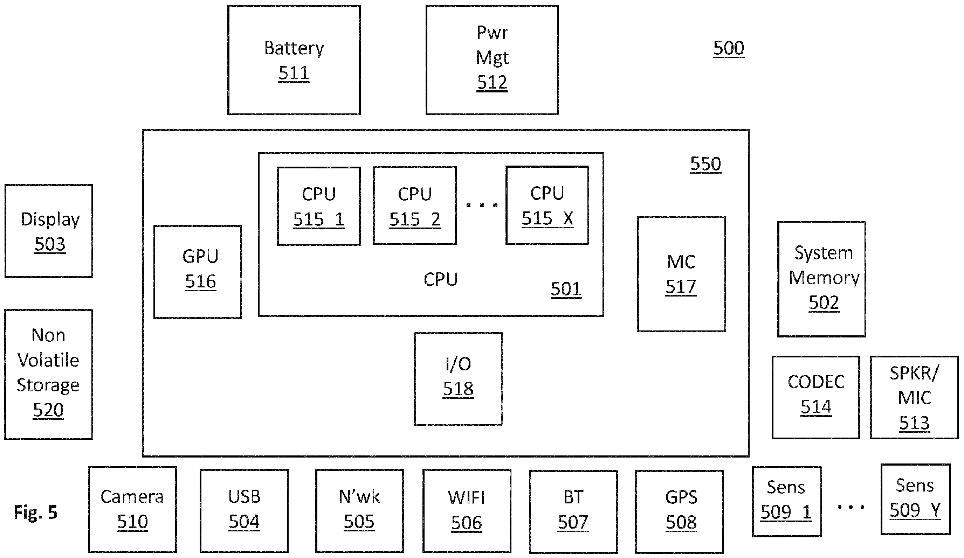

Fig. 5 provides an exemplary depiction of a computing system 500 (e.g., a smartphone, a tablet computer, a laptop computer, a desktop computer, a server computer, etc.). As observed in FIG. 5, the basic computing system 500 may include a central processing unit 501 (which may include, e.g., a plurality of general purpose processing cores 515_1 through 515_X) and a main memory controller 517 disposed on a multi-core processor or applications processor, system memory 502, a display 503 (e.g., touchscreen, flat-panel), a local wired point-to-point link (e.g., USB) interface 504, various network I/O functions 505 (such as an Ethernet interface and/or cellular modem subsystem), a wireless local area network (e.g., WiFi) interface 506, a wireless point-to-point link (e.g., Bluetooth) interface 507 and a Global Positioning System interface 508, various sensors 509_1 through 509_Y, one or more cameras 510, a battery 511, a power management control unit 512, a speaker and microphone 513 and an audio coder/decoder 514.

An applications processor or multi-core processor 550 may include one or more general purpose processing cores 515 within its CPU 501, one or more graphical processing units 516, a memory management function 517 (e.g., a memory controller) and an I/O control function 518. The general purpose processing cores 515 typically execute the operating system and application software of the computing system. The graphics processing unit 516 typically executes graphics intensive functions to, e.g., generate graphics information that is presented on the display 503. The memory control function 517 interfaces with the system memory 502 to write/read data to/from system memory 502. The power management control unit 512 generally controls the power consumption of the system 500.

Each of the touchscreen display 503, the communication interfaces 504-507, the GPS interface 508, the sensors 509, the camera(s) 510, and the speaker/microphone codec 513, 514 all can be viewed as various forms of I/O (input and/or output) relative to the overall computing system including, where appropriate, an integrated peripheral device as well (e.g., the one or more cameras 510). Depending on implementation, various ones of these I/O components may be integrated on the applications processor/multi-core processor 550 or may be located off the die or outside the package of the applications processor/multi-core processor 550. The computing system also includes non-volatile storage 520 which may be the mass storage component of the system.

The system may have a multi-level system memory that can be configured as described above to ensure a certain amount of faster, higher level system memory resources are devoted to higher priority users including reduced or no contention for such resources.

Embodiments of the invention may include various processes as set forth above. The processes may be embodied in machine-executable instructions. The instructions can be used to cause a general-purpose or special-purpose processor to perform certain processes. Alternatively, these processes may be performed by specific/custom hardware components that contain hardwired logic circuitry or programmable logic circuitry (e.g., FPGA, PLD) for performing the processes, or by any combination of programmed computer components and custom hardware components.

Elements of the present invention may also be provided as a machine-readable medium for storing the machine-executable instructions. The machine-readable medium may include, but is not limited to, floppy diskettes, optical disks, CD-ROMs, and magneto-optical disks, FLASH memory, ROMs, RAMs, EPROMs, EEPROMs, magnetic or optical cards, propagation media or other type of media/machine-readable medium suitable for storing electronic instructions. For example, the present invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

In the foregoing specification, the invention has been described with reference to specific exemplary embodiments thereof. It will, however, be evident that various modifications and changes may be made thereto without departing from the broader spirit and scope of the invention as set forth in the appended claims. The specification and drawings are, accordingly, to be regarded in an illustrative rather than a restrictive sense.

## Claims

1. An apparatus, comprising:
a memory controller to interface to a multi-level system memory **characterized by** a faster higher level and a slower lower level in which the higher level is to act as a cache for the lower level and in which a first capacity of the higher level is less than a second capacity of the lower level such that caching resources of the higher level are oversubscribe-able, the apparatus comprising configuration register space to support dedication of a region of the higher level to higher priority users of the multi-level system memory in which:
a) an amount of the second capacity is declared un-useable to reduce oversubscription of the caching resources; and/or
b) system memory address space of the multi-level system memory is allocated so that requests associated with lower priority users will not compete with requests associated with the higher priority users for the caching resources.

2. The apparatus of claim 1 wherein the cache is a direct mapped cache.

3. The apparatus of claim 1 wherein the configuration register space is to indicate whether the apparatus will operate according to a) above.

4. The apparatus of claim 3 wherein the configuration register space is to indicate if the oversubscription is eliminated.

5. The apparatus of claim 1 wherein the configuration register space is to indicate whether the apparatus will operate according to b) above.

6. The apparatus of claim 1 wherein the configuration register space is to indicate whether the apparatus will operate according to a) and b) above.

7. A machine readable storage medium containing program code, the program code to be executed by a processor of a computer to cause the computer to perform a method, comprising:
recognizing higher priority users of a multi-level system memory **characterized by** a faster higher level and a slower lower level in which the higher level is to act as a cache for the lower level and in which a first capacity of the higher level is less than a second capacity of the lower level such that caching resources of the higher level are oversubscribe-able;
performing at least one of a) and b) below:
a) declaring an amount of the second capacity un-useable to reduce oversubscription of the caching resources;
b) allocating system memory address space of the multi-level system memory so that requests associated with lower priority users will not compete with requests associated with the higher priority users for the caching resources.

8. The machine readable storage medium of claim 7 wherein a) above is performed.

9. The machine readable storage medium of claim 8 wherein a) and b) above is performed.

10. The machine readable storage medium of claim 8 wherein the method further comprises refraining from allocating system memory addresses that map to a same unit of the caching resources.

11. The machine readable storage medium of claim 10 wherein the refraining further comprises applying a function of a memory controller, or an inverse thereof, to determine the system memory addresses, the function to be used by the memory controller to determine which caching resource unit a system memory address maps to.

12. The machine readable storage medium of claim 8 wherein the oversubscription is eliminated.

13. The machine readable storage medium of claim 7 wherein b) above is performed.

14. The machine readable storage medium of claim 7 wherein the machine readable medium is a component of the computer.

15. A computing system comprising the subject matter recited by any of claims 1 through 14
